# EUROPÄISCHE PATENTSCHRIFT

(11) **EP 3 348 383 B1**
(45) Veröffentlichungstag und Bekanntmachung des Hinweises auf die Patenterteilung: **23.09.2020**
(21) Anmeldenummer: 17206429.7
(22) Anmeldetag: 11.12.2017
(51) Int. Cl.: B29C 65/78, B25B 11/00

(54) **VERFAHREN UND VORRICHTUNG ZUM APPLIZIEREN EINER KOMPONENTE AN EINEM BAUTEIL MITTELS EINES MANIPULATORS**
METHOD AND DEVICE FOR APPLYING AN ELEMENT TO A COMPONENT PART BY USE OF A MANIPULATOR
PROCÉDÉ ET DISPOSITIF D'APPLICATION D'UN COMPOSANT À UN ÉLÉMENT STRUCTURAL AU MOYEN D'UN MANIPULATEUR

(30) Priorität: 11.01.2017 DE 102017100448; 04.09.2017 DE 102017120243
(43) Veröffentlichungstag der Anmeldung: 18.07.2018
(73) Patentinhaber: Sika Technology AG, 6340 Baar (CH)
(72) Erfinder: HOTZ, Ernst, 69250 Schönau (DE); SANDER, Wolf-Peter, 61130 Nidderau (DE)
(74) Vertreter: Sika Patent Attorneys

(56) Entgegenhaltungen:
- EP-A2- 0 392 974
- FR-A1- 2 848 976
- US-A1- 2013 020 743

## Beschreibung

Die vorliegende Erfindung betrifft in Verfahren zum Applizieren, insbesondere zum Anpressen, einer Komponente an einem Bauteil mittels eines Manipulators.

Im Bereich des Fahrzeugbaus werden oftmals Komponenten, insbesondere Folien, Pads oder dergleichen, insbesondere zur Körperschalldämpfung, per Hand befestigt oder mittels eines Roboters an einem Karosseriebauteil appliziert. Bei einem zu hohen Anpressdruck besteht hierbei das Risiko einer Verformung des Karosseriebauteils, während bei einem zu niedrigen oder ungleichmäßigen Anpressdruck es zu Lufteinschlüssen unter der zu applizierenden Komponente, insbesondere unter der zu applizierenden Folie oder des Pads, kommen kann, insbesondere wenn diese vollflächig angeklebt werden soll, was bei Dämpfungsapplikationen erwünscht ist. Bei Verwendung eines zu niedrigen oder ungleichmäßigen Anpressdrucks oder falls es zu Lufteinschlüssen kommt, kann es ferner dazu kommen, dass in einem weiteren Produktionsschritt, wie beispielsweise das Eintauchen des Karosseriebauteils in einem Lackbad oder dergleichen, es zur Abtrennung zwischen der Komponente und dem Karosseriebauteil kommen kann, z.B. weil Flüssigkeit zwischen die Komponente und das Bauteil fließt und die Klebung auflöst.

Aus der EP 0 986 457 A1 ist eine Vorrichtung zum Anbringen einer akustisch wirksamen Folie bekannt geworden. Die Vorrichtung wird zum Anbringen einer Folie auf ein Bauteil verwendet, wobei die Vorrichtung einen geschlossenen Rahmen umfasst, welcher mit einer flexiblen Membran zum Halten und Applizieren der Folie ausgebildet ist. Die Folie wird hierbei zunächst auf der flexiblen Membran angeordnet. Die Membran wird über einer konkaven Auflage am Rahmen befestigt. Zum Anbringen an einem Bauteil wird Luft, welche sich zwischen der Folie und dem Bauteil befindet, abgesaugt. Hierfür liegt der Rahmen dichtend am Bauteil an, weiterhin sind an dem Rahmen Unterdrucköffnungen zum Absaugen der Luft vorgesehen. Durch die flexible Membran, auf welcher die Folie aufgelegt ist und welche in ihrer Ruhestellung zu einer Seite des Bauteils hin konvex gekrümmt verläuft, wird die Folie zunächst aufgenommen und angehoben und in einem weiteren Schritt, in dem die Folie an das Bauteil angebracht werden soll, wird die Membran mit der Folie an das Bauteil herangeführt, indem die Luft, welche sich zwischen dem Bauteil und der Membran befindet, durch die Unterdrucköffnungen abgesaugt wird. Hierdurch legt sich die Membran an die Folie und das Bauteil schmiegend an. Dabei kann es dazu kommen, dass sich die Membran am Bauteil anlegt und die weitere Luftabfuhr unterbleibt, so dass zwischen der Folie und dem Bauteil Lufteinschlüsse bilden. Außerdem muss die Folie vorher umständlich per Hand auf die Membran gelegt und genau ausgerichtet werden. Senkrechte Befestigungen oder Befestigungen, bei welchen der Manipulator die Folie von oben nach unten aufbringt, z.B. am Boden des Fahrgastraums eines KfZ, sind i.d.R. nicht möglich, weil die Folie sonst beim Verschwenken des Manipulators von der Auflage abfällt.

Weiterhin offenbart die FR 2848976 einen Manipulator zum Anbringen einer Komponente an einem Karosseriebauteil, wobei der Manipulator aus einem stabilen 25 Rahmen besteht, der mittels Dichtelementen am Karosseriebauteil dichtend angelagert werden kann. Eine Membran ist über den Rahmen gespannt und ist flexibel. In der Membran sind Saugöffnungen vorgesehen, über die Luft mittels Kanälen abgesaugt werden kann, wodurch sich ein Unterdruck zwischen Membran und Komponente ergibt und die Komponente an der Membran anliegend angesaugt 30 wird. Des Weiteren offenbart die Druckschrift Luftkanäle im Rahmen, durch welche ein zweiter Unterdruck zwischen der Komponente und dem Bauteil erzeugt werden kann, wodurch sich die Komponente am Bauteil anlegt. Als besonders vorteilhaft wird hier beschrieben, dass sich die Komponente dadurch verformt und auch in Sicken anlegt, die im Karosseriebauteil vorhanden sein können.

Der vorliegenden Erfindung liegt daher die Aufgabe zu Grunde, ein Verfahren bereitzustellen, mit dem eine Komponente mittels eines Manipulators an einem Bauteil automatisch appliziert werden kann, wobei die Probleme des Stands der Technik vermieden werden.

Diese Aufgabe wird gelöst mit einem Verfahren zum Applizieren, insbesondere zum Anpressen, einer Komponente an einem Bauteil gemäß Anspruch 1 und mittels einer Vorrichtung nach Anspruch 15. Weitere Vorteile und Merkmale der vorliegenden Erfindung ergeben sich aus den abhängigen Ansprüchen.

Nach einer zweiten alternativen Ausführungsform der Erfindung ist der erste Teilzwischenraum und der zweite Teilzwischenraum luftleitend verbunden, d.h. der ersten Zwischenraum ist ein luftleitend verbundener Raum, so dass sich der im ersten Teilzwischenraum erzeugte Unterdruck, d. h. der Unterdruck zwischen dem Stützelement und der Membran, sich in den zweiten Teilzwischenraum fortsetzt und so unmittelbar auf die Komponente wirkt. Bei dieser zweiten alternativen Ausführungsform kann auf die ersten Dichtelemente verzichtet werden, die bei der ersten alternativen Ausführungsform vorhanden sind, da in diesem Fall die Membran selbst unmittelbar zwischen Stützelement und Komponente zu liegen kommt und den ersten Zwischenraum zwischen Komponente und Stützelement umlaufend abdichtet. Im ersten Zwischenraum selbst ist die Membran bevorzugt mit einer Perforation, Löchern oder Öffnungen ausgestattet, so dass sich der Unterdruck unmittelbar auf die Komponente auswirkt und diese gegen das Stützelement presst. Luft von außen kann nicht einfließen, da die Membran selbst zwischen dem Stützelement und der Komponente den Unterdruck im ersten Zwischenraum zwischen Komponente und Stützelement abdichtet.

Damit die Membran die Komponente gegenüber dem Stützelement auch ohne zusätzliche erste Dichtelemente abdichtet, ist es vorgesehen, dass die Membran vorgespannt wird oder mittels eines Eindringens des Stützelements in einen umlaufenden Rahmen, in den die Membran eingespannt ist, gespannt wird, so dass es mittels umlaufender Dichtwirkung der Membran an den Rändern zwischen Stützelement und Komponente zur wirksamen Abdichtung des Unterdrucks im Zwischenraum zwischen der Komponente und dem Stützelement kommt.

Bei der ersten alternativen Ausführungsform der Erfindung kann der Manipulator mehrere mit ersten Dichtelementen oder Dichtbereichslippen abgeschlossene Bereiche am Stützelement aufweisen, die jeweils mit einer Membran überzogen sind, sodass über den Manipulator bzw. das Stützelement verteilt mehrere Haltebereiche entstehen, mit Hilfe deren die Komponente an mehreren Stellen saugend befestigt und dadurch angehoben werden kann. In diesem Fall sind die einzelnen Bereiche der Stützfläche jeweils einzeln mit ersten Dichtelementen oder Dichtbereichslippen umlaufend abgedichtet, so dass ein sich dann insbesondere mittels einer Vakuumpumpe einstellender Unterdruck zwischen der Membran und dem entsprechenden Bereich des Stützelements, der beispielsweise mittels im Stützelement angebrachten ersten Durchgangskanälen erzeugt werden kann, die Membran in Richtung des Stützelements bewegt und dadurch einen entsprechenden Unterdruck im ersten Zwischenraum zwischen Membran und Komponente erzeugt da dieser erste Zwischenraum über die ersten Dichtelemente abgedichtet ist.

Alternativ kann aber auch das Stützelement an der der Membran zugewandten Stützelementfläche Bereiche aufweisen, insbesondere eine Luftdurchlassstruktur, die derart gestaltet sind, dass sie allein mittels der Membran beim Auflegen auf die Komponente luftdicht abschließen, beispielsweise durch leichte Erhebungen oder Rundungen an den Rändern dieser Bereiche oder durch eine dicke, flexible Membran. Besonders bevorzugt weist das Stützelement dabei eine auswechselbare Luftdurchlassstruktur, also eine auswechselbare Stützelementfläche, auf, so dass je nach anzuhebender Komponente die Luftdurchlassstruktur mit oder ohne Dichtelemente oder Dichtlippen an die Komponente angepasst verwendet werden kann. Mit Vorteil befinden sich dabei zwischen der der Membran zugewandten Stützelementfläche und abnehmbarer Luftdurchlassstruktur Dichtelemente sowie geeignete Führungs- und Befestigungselemente zur sicheren Führung und Befestigung der Auswechselbaren Luftdurchlassstruktur.

2. Bewegen des Manipulators mit Komponente zu dem Bauteil.

Durch das Ansaugen der Komponente mit Hilfe des Unterdrucks in dem mindestens einen ersten Zwischenraum kann die Komponente vom Stapel angehoben und mittels des Manipulators zu dem Bauteil bewegt werden.

3. Anordnen der Komponente an zumindest einer Teilfläche des Bauteils mittels des Manipulators, wobei während des Anordnens ein zweiter Unterdruck in einem zweiten Zwischenraum zwischen dem Stützelement und dem Bauteil erzeugt wird.

Sobald die Komponente das Bauteil erreicht, wird der Manipulator mit Hilfe von zweiten Dichtelementen gegen das Bauteil gedrückt und es entsteht ein zweiter Zwischenraum zwischen dem Bauteil, dem Rahmen des Manipulators und der Membran, die auf dem Stützelement gespannt aufliegt und die mittels des ersten Unterdrucks in Richtung des Stützelements gespannt ist, so dass die Komponente immer noch saugend am Stützelement befestigt ist. Zuvor kann die zu applizierende Komponente mit einem Klebstoff an der Bauteilseite versehen werden, um die Komponente klebend am Bauteil zu befestigen. Der Kleberauftrag kann entweder durch Abziehen einer Schutzfolie an der Bauteilseite der Komponente erfolgen, so dass eine Kleberschicht frei wird, die auf der Komponente aufliegt, oder durch das Aufbringen einer separaten Kleberschicht, beispielsweise indem der Manipulator zuvor über eine mit einem Kleber ausgestattete Rolle fährt und die Bauteilseite der Komponente entsprechend mit einer Kleberschicht ausstattet.

Sobald der zweite Zwischenraum mittels der zweiten Dichtelemente hergestellt ist, die insbesondere zwischen dem Rahmen des Manipulators und dem Bauteil zu liegen kommen, wird ein zweiter Unterdruck erzeugt, indem die Luft in dem zweiten Zwischenraum abgezogen wird. Dies kann beispielsweise durch zweite Durchgangskanäle im Rahmen erfolgen, die wiederum mit einer Vakuumpumpe oder einer Venturidüse verbunden sind. Durch die Erzeugung eines zweiten Unterdrucks im zweiten Zwischenraum wird die Membran mit der Komponente wieder, entgegen der Richtung hin zum Stützelement, in Richtung des Bauteils gezogen und die Membran entfernt sich mit der Komponente vom Stützelement in Richtung auf das Bauteil. Sobald die Komponente jedenfalls teilweise am Bauteil festgelegt ist, beispielsweise durch ein erstes Anhaften bevorzugt mittig, wird der zweite Unterdruck weiter erhöht und/oder der erste Unterdruck reduziert. Ggf. zieht der zweite Unterdruck, sofern dessen auf die Membran einwirkende Kraft größer ist als die des ersten Unterdrucks, die Membran von der dichtenden Anlage am Stützelement bzw. der Luftdurchlassstruktur bzw. der dort angebrachten Dichtelemente ab, so dass der erste Unterdruck zum Erliegen kommt.

Um insbesondere ein ungewolltes Abfallen der Komponente vor dem sicheren Anhaften am Bauteil zu vermeiden bzw. um ungewollte Kräfte auf das Stützelement durch den zweiten Unterdruck zu vermeiden, ist es nach einer weiteren Ausführungsform der Erfindung vorgesehen, dass das Stützelement gegenüber dem Rahmen federnd gelagert ist, so dass das Stützelement im Rahmen eine im wesentlichen senkrecht zum Bauteil gerichtete Relativbewegung ausführen kann. Die Federkraft ist mit Vorteil dabei schwächer als die Kraft des ersten Unterdrucks, so dass ein Abfallen der Komponente vermieden wird, wenn der zweite Unterdruck größer als der erste Unterdruck wird und die Komponente noch nicht sicher am Bauteil anhaftet.

4. Befestigen der Komponente am Bauteil durch Erhöhen der Differenz zwischen dem ersten und zweiten Unterdruck.

Der Manipulator hält nach einer Ausführungsform der Erfindung den ersten Unterdruck bis nach dem erfolgten Anordnen und zumindest teilweisen Befestigung der Komponente am Bauteil kontinuierlich aufrecht. Die Komponente wird dabei von der Membran in Position gehalten, bis sie am Bauteil durch den zweiten Unterdruck, vorzugsweise von der Mitte der Komponente hin zum Rand sukzessive festgeklebt bzw. befestigt wird bzw. dort anhaftet. Diese Übergabe wird bevorzugt durch ein Stützelement unterstützt, dass gegenüber dem Rahmen federnd gelagert ist.

Der erste Unterdruck kann nach einem ersten Teilbefestigen der Komponente vollständig abgeschaltet werden oder sogar mittels eines Überdrucks den zweiten Unterdruck unterstützen, wobei der zweite Unterdruck bevorzugt die Luft aus dem zweiten Zwischenraum entzieht, wodurch die Wahrscheinlichkeit von Lufteinschlüssen zwischen der Komponente und dem Bauteil reduziert wird.

Nach der vorliegenden Erfindung wird also zunächst eine zu applizierende Komponente mittels des Manipulators, an welchem mit Vorteil eine Vakuumpumpe angeschlossen ist, angesaugt. Anschließend wird der Manipulator mit angesaugter Komponente zu dem Bauteil bewegt, an dem die angesaugte Komponente appliziert werden soll. Die zu applizierende Komponente wird zumindest an einer Teilfläche des Bauteils mittels des Manipulators angeordnet, insbesondere über eine Fläche gleichmäßig angepresst, wobei der Manipulator das Ansaugen der zu applizierenden Komponente jedenfalls bis nach einem ersten Anhaften der Komponente am Bauteil kontinuierlich aufrecht erhält. Vor und/oder während des Anordnens wird bevorzugt ein Unterdruck, insbesondere durch das Absaugen von Luft, in dem zweiten Zwischenraum zwischen dem Bauteil und dem Manipulator erzeugt. In diesem Zwischenraum befindet sich die zu applizierende Komponente.

Anschließend wird die Komponente durch den Manipulator losgelassen, indem der Manipulator das Ansaugen, jedenfalls vorübergehend, durch Reduktion oder Abschalten des ersten Unterdrucks unterbricht. Bevorzugt weist der Manipulator eine Ansaugfläche auf, insbesondere ein als Stützplatte ausgeformtes Stützelement, mit welcher die zu applizierende Komponente angesaugt wird, wobei die Ansaugfläche des Stützelements bevorzugt kleiner ausgebildet ist als eine Ansaugfläche der anzusaugenden Komponente.

Bei dem vorgeschlagenen Verfahren kann in vorteilhafter Weise eine zu applizierende Komponente zunächst mittels des Manipulators von einem Stapel, auf dem eine Vielzahl zu applizierender Komponenten aufeinander angeordnet sind, angesaugt werden. Durch das Ansaugen einer zu applizierenden Komponente von einem Stapel als solches wird die anzusaugende Komponente sicher und schonend vom Manipulator ergriffen. Durch das Ansaugen mittels einer Vakuumpumpe, welche an dem Manipulator angeschlossen ist, kann die zu applizierende Komponente zerstörungsfrei von dem Stapel abgenommen werden. Dazu kann der Manipulator zur Erzeugung des ersten Unterdrucks die Komponente zunächst leicht gegen den Stapel drücken, so dass ein erstes Dichtelement, das sich zwischen einem Stützelement des Manipulators und der Komponente befindet, oder die Membran selbst, sofern keine ersten Dichtelemente sondern z.B. eine gelochte Membran verwendet wird, dichtend abschließt.

Nach der Entnahme einer zu applizierenden Komponente kann der Manipulator die angesaugte zu applizierende Komponente flexibel an einem Bauteil positionieren. Nach dem Anordnen bzw. Positionieren der zu applizierenden Komponente und insbesondere nach einem ersten Fixieren bzw. Anhaften der Komponente am Bauteil kann mit Hilfe des nachlassenden ersten Unterdrucks zwischen dem Manipulator und dem Bauteil die zu applizierende Komponente an das Bauteil angeschmiegt bzw. angeklebt und dann losgelassen werden. Der zweite Unterdruck hält die Komponente dabei selbst bei nachlassendem oder wegfallendem ersten Unterdruck in Position.

Bevorzugt wird der für das Ansaugen der zu applizierenden Komponente erzeugte erste Unterdruck nach dem Anordnen und nach einem ersten Fixieren der zu applizierenden Komponente an dem Bauteil bis zu einem Erreichen eines Umgebungsnormaldruckes sukzessive reduziert. Es kann ferner vorgesehen sein, dass der für das Ansaugen erzeugte Unterdruck in einen gegenüber dem Umgebungsdruck höheren Druck (Überdruck) gewandelt wird, wodurch es möglich ist, die zu applizierende Komponente an einem Bauteil anzuformen, das mit einem dreidimensionalen Relief ausgestattet ist oder gekrümmt oder gebogen ist. Alternativ oder zusätzlich kann ein gefedertes Stützelement verwendet werden, so dass eine Bewegung der Komponente hin zum Bauteil bei beginnendem zweiten Unterdruck gewährleistet wird, selbst wenn der erste Unterdruck, insb. zur Sicherung der Komponente, noch nicht nachgelassen oder abgeschaltet wird.

Je nach zu applizierender Komponente kann der erste und zweite Unterdruck bzw. ein Überdruck im ersten Zwischenraum so gesteuert werden, dass die Komponente sukzessive von einem Mittelbereich der Komponente hin zu einem Außenbereich am Bauteil angeklebt wird, so dass keine oder nur sehr geringe Lufteinschlüsse zwischen der Komponente und dem Bauteil verbleiben. Entscheidend ist jedoch, dass am Rand der Komponente eine vollflächige Verklebung mit dem Bauteil erfolgt, d. h. dass keinerlei Flüssigkeiten, Luft, Gase oder andere Stoffe zwischen die Komponente und das Bauteil gelangen, was bei einem späteren Lackbad oder dergleichen von Vorteil ist, da die Komponente dann sicher am Bauteil klebt bzw. befestigt ist und nicht mehr abfallen kann.

Durch die Reduktion des ersten Unterdrucks bzw. den Wiederaufbau eines Umgebungsnormaldruckes bzw. eines Überdruckes relativ zum Umgebungsnormaldruck im ersten Zwischenraum bzw. durch die Erzeugung des zweiten Unterdrucks im zweiten Zwischenraum kann die zu applizierende Komponente zerstörungsfrei an dem Bauteil angeordnet werden. In vorteilhafter Weise wirken die Drücke gleichmäßig auf einer Teilfläche des Bauteils, welche von dem Manipulator abgedeckt wird. In vorteilhafter Weise kann durch das quasi-automatische Anordnen, insbesondere Anpressen, der Komponente an das Bauteil, ein zu hoher, insbesondere lokaler, Anpressdruck oder ein ungleichmäßiger Anpressdruck vermieden werden. Hierdurch wird das Risiko einer Verformung des Bauteils vermindert. Weiterhin wird durch die Erzeugung des zweiten Unterdrucks ein Einschluss von Luft zwischen Komponente und Bauteil vermindert, ggf. vermieden.

Vorliegend ist unter Bauteil insbesondere ein Blech oder ein Karosseriebauteil eines Fahrzeugs zu verstehen. Beispielsweise könnte die zu applizierende Komponente eine insbesondere selbstklebende Alu-Butylkombination sein, welche bereits im Rohbau auf geölten Flächen eingesetzt werden können. Ferner könnte mit dem vorgeschlagenen Verfahren eine Komponente an ein Bauteil appliziert werden, welches beispielsweise im Bereich der Luft- und Raumfahrttechnik, der Elektronik im Haushaltswarenbereich oder in sonstigen Herstellungsverfahren, in denen Manipulatoren verwendet werden, benutzt werden. Es ist ferner denkbar, dass die zu applizierende Komponente aus einer anderen selbstklebenden Materialkombination oder nichtklebenden Materialkombinationen besteht oder beispielsweise auch im Hochbau, z.B. zum Anbringen von Fensterflächen, Fassadenelementen oder dgl. genutzt wird.

Nach einer weiteren Ausführungsform der Erfindung wird der erste Unterdruck in dem zweiten Teilzwischenraum mittels einer Membran erzeugt, die zwischen der Komponente und dem Stützelement dichtend angeordnet ist und die auf der dem Stützelement zugewandten Seite mit einer Vakuumpumpe luftleitend in Verbindung steht. Nach einer Ausführungsform der Erfindung übernimmt allein die luftdurchlässige Membran die Dichtfunktion zwischen Stützelement und Komponente, so dass auf zusätzliche Dichtelemente oder Dichtlippen verzichtet werden kann.

Der erfindungsgemäße Manipulator weist mit Vorteil ein Stützelement auf, das an einer oder mehreren Stellen entsprechende mittels ersten Dichtelementen abgeschlossene erste Teilzwischenräume aufweist, die luftleitend mit Durchgangskanälen verbunden sind, die mit einer Vakuumpumpe luftleitend in Verbindung stehen. Mit Vorteil weist das Stützelement dabei an der der Membran zugeordneten Seite Luftdurchlassstrukturen, wie beispielsweise Gitter, auf durch die die Luft aus dem ersten Teilzwischenraum zwischen Membran und Stützelement abgesaugt werden kann, wodurch sich die Membran in Richtung des Stützelements bewegt und einen ersten Unterdruck zwischen der Membran und der anzusaugenden Komponente erzeugt. Im Gleichgewichtsfall ist dabei der Unterdruck zwischen dem Stützelement und der Membran gleich groß wie zwischen der Membran und der Komponente, d. h. zwischen dem Stützelement und der Komponente existiert ein erster Abstand, der durch das erste Dichtelement erzeugt wird. In diesem Abstand kann sich die Membran verschieben; diese ist flexibel und dehnbar und folgt einem Unterdruck zwischen Membran und Stützelement, so dass sich der erste Unterdruck zwischen Membran und Komponente einstellt. Mittels der Luftdurchlassstruktur wird vermieden, dass bei einem Aufliegen der Membran auf dem Stützelement der Durchgangskanal verschlossen wird und keine weitere Luft abtransportiert werden kann.

Nach einer zweiten bevorzugten Ausführungsform der Erfindung weist der erfindungsgemäße Manipulator ein Stützelement auf, das verschiebbar und ggf. federnd in einem Rahmen derart gelagert ist, dass sich eine Membran zwischen dem Stützelement und der anzusaugenden Komponente derart anordnet und strafft, dass es zu einer umlaufenden dichtenden Anlage des Stützelements an der anzusaugenden Komponente beim Aufbringen bzw. Aufliegen des Stützelements auf der Komponente kommt, wobei der vorgenannte erste Teilzwischenraum zwischen Stützelement und Membran ebenfalls luftleitend mit Durchgangskanälen verbunden ist, die mit einer Vakuumpumpe luftleitend in Verbindung stehen. Auch hier kann das Stützelement an der der Membran zugeordnete Seite Luftdurchlassstrukturen, wie beispielsweise Gitter, aufweisen. Durch die luftleitende Verbindung zwischen dem ersten Teilzwischenraum und dem zweiten Teilzwischenraum wird ein Unterdruck unmittelbar zwischen Komponente und Stützelement erzeugt. In diesem Unterdruck liegt die insbesondere mit Öffnungen oder Löchern ausgestattete Membran oder eine Membran, die luftdurchlässig in diesem Bereich ausgestaltet ist, an der Luftdurchlassstruktur oder dort angeordneten Dichtelementen an. In diesem Fall dient die Membran zwischen Stützelement und Komponente zur Abdichtung des Stützelements gegenüber der Membran und - nach dem Aufsetzen der Komponente am Bauteil - zur dichtenden Anordnung des Manipulatorrahmens am Bauteil und somit zur Erzeugung des zweiten Unterdrucks.

Der Vorteil der zweiten bevorzugten Ausführungsform der Erfindung liegt insbesondere darin, dass auf erste Dichtelemente verzichtet werden kann und dass ein Fehler bei der Handhabung der Komponente, also beispielsweise ein Abfallen der Komponente sofort durch einen Abfall des Unterdrucks detektiert werden kann, was bei der ersten bevorzugten Ausführungsform nicht der Fall ist, da sich der Unterdruck im Wesentlichen im ersten Teilzwischenraum zwischen Stützelement und Membran ausbildet und ein Abfallen der Komponente nicht ohne weiteres durch Messung des dann fehlenden Unterdrucks detektiert werden kann.

Nach einer weiteren Ausführungsform der Erfindung wird der zweite Unterdruck in dem zweiten Zwischenraum mittels eines am Bauteil dichtend angeordneten Rahmens des Manipulators erzeugt, wobei der zweite Zwischenraum luftleitend mit der Vakuumpumpe in Verbindung steht.

Der zweite Zwischenraum, der zwischen Rahmen, Bauteil und Membran nach dem Anordnen des Manipulators am Bauteil entsteht, wird insbesondere durch zweite Durchgangskanäle erzeugt, die diesen zweiten Zwischenraum mit der Vakuumpumpe oder einer separaten Vakuumpumpe verbinden.

Nach einer weiteren Ausführungsform der Erfindung wird der zweite Zwischenraum durch den Rahmen, das Bauteil und das Membran begrenzt, und die Komponente kommt nach dem Anordnen in dem zweiten Zwischenraum zu liegen.

Indem die Komponente in dem zweiten Zwischenraum zu liegen kommt, wird diese beim Erzeugen des zweiten Unterdrucks mit Hilfe der Membran in Richtung des Bauteils verschoben, wobei der zweite Unterdruck dem ersten Unterdruck entgegen wirkt bzw. nach einem ersten Anhaften der erste Unterdruck abgeschaltet werden kann, so dass der zweite Unterdruck ausreicht, um die Komponente vollflächig am Bauteil zu verkleben.

Nach einer weiteren Ausführungsform der Erfindung weist das Stützelement mindestens einen Durchgangskanal auf, der mit der Vakuumpumpe und mindestens einer der Membran zugewandten Luftdurchlassstruktur luftleitend in Verbindung steht, wobei die Membran über mindestens ein erstes Dichtelement gegenüber dem Stützelement jedenfalls im Bereich der mindestens einen Luftdurchlassstruktur dichtend beabstandet wird, wobei Luft zwischen der Membran und dem Stützelement entfernt wird, so dass sich die Membran zum Stützelement hin bewegt, so dass im ersten Zwischenraum ein Unterdruck entsteht.

Nach einer weiteren Ausführungsform der Erfindung weist die Komponente eine Ansaugseite auf, mit der die Komponente flächig von dem Manipulator angesaugt wird und eine gegenüberliegende, insbesondere klebende Bauteilseite, mit der die Komponente an dem Bauteil angeordnet, insbesondere angepresst und angeklebt, wird.

Diese Ansaugseite ist bevorzugt derart gestaltet, dass eine luftdichte Verbindung zwischen Ansaugseite der Komponente und Membran entsteht, die auf dem ersten Dichtelement aufliegt und insoweit beispielsweise durch ein elastisches Dichtelement zwischen Dichtelement und Komponente eingeklemmt und insoweit dichtend befestigt wird. Da sich die Membran in diesem Fall über dem Zwischenraum zwischen Stützelement und Komponente spannt, muss diese flexibel, d. h. dehnbar, gestaltet sein, um eine Auslenkung in Richtung des Stützelements zu gewährleisten und um den ersten Unterdruck erzeugen zu können.

Nach einer weiteren Ausführungsform der Erfindung wird die mindestens eine Luftdurchlassstruktur (30) auf der der Membran (26) zugewandten Außenseite des Stützelements (11) angebracht, angeformt oder auswechselbar angeordnet.

Nach einer weiteren Ausführungsform der Erfindung wird der zweite Unterdruck mittels eines Anordnens der Komponente an dem Bauteil mittels mindestens eines zweiten Dichtelements erzeugt, das zwischen dem Rahmen des Manipulators und dem Bauteil zu liegen kommt, so dass der zweite Zwischenraum entsteht. Das Befestigen der Komponente am Bauteil erfolgt in einem ersten Schritt durch Reduktion des ersten und/oder Erhöhen des zweiten Unterdrucks, so dass die Komponente zumindest teilweise am Bauteil anhaftet und in einem zweiten Schritt durch eine weitere Reduktion des ersten und/oder Erhöhen des zweiten Unterdrucks und/oder Abschalten des ersten Unterdrucks.

Nach einer weiteren Ausführungsform der Erfindung ist das erste Dichtelement ggf. zusammen mit der mindestens einen Luftdurchlassstruktur am Stützelement insbesondere auswechselbar und mit Vorteil umlaufend angeordnet.

Das Stützelement kann nach der ersten bevorzugten Ausführungsform der Erfindung mehrere Bereiche aufweisen, die mit ersten Dichtelementen umfassend bzw. umlaufend ausgestattet sind, über die einzelne oder eine gemeinsame Membran gespannt sein können. Bevorzugt ist die Membran über das gesamte Stützelement hinweg gespannt, während das Stützelement einen oder mehrere Bereiche mit ersten umlaufenden Dichtelementen aufweist, die jeweils am Stützelement angeordnete Luftdurchlassstrukturen, wie z. B. Öffnungen oder Gitter, umgeben. Die Membran ist dabei bevorzugt mittels eines Befestigungselements am Rahmen dichtend befestigt und über die ersten Dichtelemente über das mittig im Rahmen beabstandete Stützelement hinweg gespannt. Das Stützelement kann dabei bevorzugt auswechselbare Luftdurchlassstrukturen aufweisen, die ggf. mit ersten Dichtelementen umlaufend ausgestattet sind, so dass ein und dasselbe Stützelement mit ggf. mehreren Durchgangskanälen und Luftdurchlassstrukturen für mehrere Ansaugbereiche genutzt werden kann.

Insbesondere beim Verzicht auf erste Dichtelemente ist eine Vorspannung der Membran insbesondere dadurch zu erzielen, als das Stützelement über eine gewisse Eindringtiefe in den Rahmen des Manipulators eintaucht, so dass die Membran, die in entsprechenden Keder des Rahmens gehalten wird, gespannt wird und somit dichtend zwischen Stützelement und Komponente zu liegen kommt.

Nach einer weiteren Ausführungsform der Erfindung wird der erste Unterdruck mittels einer ersten Vakuumpumpe und der zweite Unterdruck mittels einer zweiten Vakuumpumpe erzeugt, und/oder der erste Zwischenraum wird über die Membran und einen Druckregler bzw. -minderer und/oder der zweite Zwischenraum über einen Druckregler mit einer Vakuumpumpe derart verbunden, dass der erste und zweite Unterdruck kontinuierlich oder stufenweise und mit Vorteil unabhängig voneinander erhöht oder vermindert werden können.

Nach einer weiteren Ausführungsform der Erfindung ist der Rahmen und das Stützelement derart zueinander bzw. voneinander beabstandet, dass ein Berühren einer angesaugten Komponente durch den Rahmen unterbleibt.

Zwischen das Stützelement und Rahmen ist bevorzugt ein zweiter Abstand vorgesehen, der ein Durchführen der Membran und ein Berühren der Komponente mit dem Rahmen verhindert. Gleichzeitig ist es vorteilhaft, das Stützelement in seiner Erstreckungsebene etwas kleiner zu dimensionieren als die Komponente, um ein sicheres Anfügen am Bauteil zu gewährleisten. Unter Erstreckungsebene versteht die Erfindung dabei im Wesentlichen die zweidimensionale Ausdehnung des Stützelements, da insbesondere eine flächige Komponente am Bauteil befestigt werden soll, d. h. die Breite und/oder die Länge des Stützelements sollte gleich groß oder kleiner sein als die entsprechende Breite bzw. Länge der Komponente.

Nach einer weiteren Ausführungsform der Erfindung ist die Bauteilseite der Komponente mit einer Klebeschicht ausgebildet, welche beim Befestigen der Komponente an dem Bauteil mit dem Bauteil verbunden wird.

Nach einer weiteren Ausführungsform der Erfindung erfolgt das Befestigen der Komponente an dem Bauteil ausgehend von einer Ansaugstelle, welche im Wesentlichen mittig an der Komponente liegt, bis zu einem Rand der Komponente durch Erhöhen der Differenz zwischen dem ersten und zweiten Unterdruck derart, dass die Komponente jedenfalls umlaufend ohne Lufteinschlüsse am Bauteil zu liegen kommt.

Die Vorrichtung gemäß der Erfindung weist einen Manipulator zum gleichmäßigen Anpressen einer Komponente an insbesondere einer Fläche eines Bauteils auf, wobei der Manipulator die zu applizierende Komponente mittels eines ersten Unterdrucks aufnimmt, der in einem ersten Zwischenraum zwischen einem Stützelement und der Komponente erzeugt wird, der Manipulator die zu applizierende Komponente zu dem Bauteil bewegt, der Manipulator die Komponente an zumindest einer Teilfläche des Bauteils anordnet, wobei während des Anordnens ein zweiter Unterdruck in einem zweiten Zwischenraum zwischen dem Stützelement und dem Bauteil erzeugt wird, und wobei der Manipulator die Komponente am Bauteil zum Beispiel durch Erhöhen der Differenz zwischen dem zweiten und ersten Unterdruck insbesondere klebend befestigt.

Gemäß einer bevorzugten Ausführungsform verläuft durch das Stützelement ein bevorzugt orthogonal zu einer Ansaugfläche des Stützelements, vorzugsweise im Wesentlichen mittig, angeordneter Durchgangskanal, in dem ein durch die Vakuumpumpe erzeugter Luftstrom zum Ansaugen der Komponente strömt. Durch Anordnung eines Durchgangskanals an einer mittigen Position durch das Stützelement hindurch, ist es möglich, die zu applizierende Komponente zunächst gegenüber dem Stützelement konvex anliegend an den Manipulator anzusaugen. Durch den abfallenden Druck zwischen dem Stützelement und der angesaugten Komponente (also durch Erzeugen des ersten Unterdruckes, insbesondere über die Vakuumpumpe), kann sich die zu applizierende Komponente zunächst an den Manipulator anschmiegen. Ferner kann durch den im Wesentlichen mittig angeordneten Durchgangskanal die Komponente im Wesentlichen an ihrem Schwerpunkt angesaugt werden. Durch Ansaugen des Schwerpunkts der zu applizierenden Komponente kann die zu applizierende Komponente sicher von dem Manipulator gehalten werden.

Die zu applizierende Komponente weist eine Ansaugseite, mit der die Komponente flächig von dem Manipulator angesaugt wird, und eine gegenüberliegende Bauteilseite auf, mit der die Komponente an den Bauteil angeordnet, insbesondere angepresst, wird. Die Ansaugseite der Komponente ist nach dem Anordnen an dem Bauteil die an dem Bauteil frei zugängliche Seite der Komponente. Durch das Ansaugen der Komponente auf Basis von Luftdruckunterschieden kann die zu applizierende Komponente zerstörungsfrei an dem Bauteil angeordnet werden, insbesondere wirkt der auf die Komponente und das Bauteil ausgeübte Kraft während des Applizierens flächig.

Bevorzugt ist der Manipulator mit einem auswechselbaren Stützelement zum Ansaugen der Komponente ausgebildet, welches bevorzugt zumindest teilweise komplementär zu einer Bauteilfläche ausgebildet ist, auf der die Komponente zu applizieren ist. Das Verwenden eines vorgeformten, insbesondere komplementär zum Bauteil vorgeformten, auswechselbaren Stützelements erlaubt es, die zu applizierende Komponente noch vor einem Anordnen an dem Bauteil vorzuformen, insbesondere zu biegen oder zu prägen. Hierdurch kann ein Anordnen der zu applizierenden Komponente an dem Bauteil zeiteffizienter durchgeführt werden. Die zu applizierende Komponente ist dabei mit Vorteil elastisch oder teilweise elastisch verformbar.

Während des Ansaugens ermöglicht das erste Dichtelement - bei der ersten bevorzugten Ausführungsform der Erfindung - einen kontinuierlichen Luftstrom entlang dem Stützelement bzw. entlang der Stützelementfläche. Durch das erste Dichtelement wird ein Abstand zwischen Membran und Stützelement erzeugt und so eine Bewegung der Membran und der Komponente ermöglicht.

Bevorzugt ist die Luftdurchlassstruktur ein starres Gitter oder in Form von, insbesondere gleichmäßig oder ungleichmäßig auf der Ansaugfläche des Stützelements oder dem auswechselbaren Stützelement verteilten Hervorhebungen, Nuten oder Gräben ausgebildet. Im Falle einer verformbaren oder elastisch verformbaren Luftdurchlassstruktur kann diese beispielsweise aus Metall oder Kunststoff oder einem schwammartigen Material gebildet sein. Im Fall von Hervorhebungen können diese beispielsweise aus Silikon oder Gummi oder einem anderen verformbaren Material ausgebildet sein, welche basierend auf einen Krafteinfluss, wie beispielsweise einem Unterdruck verformbar sind. Bevorzugt ist mit dem ersten Dichtelement ein erster Abstand von 0-10mm, vorzugsweise von 0,2-5mm, besonders bevorzugt 2-3mm zwischen dem Stützelement und der Komponente einstellbar. Durch diesen Abstand wird ein kontinuierlicher Luftstrom zwischen der an dem ersten Dichtelement anliegenden Membran mit der zu applizierenden Komponente und dem Stützelement bzw. der Stützelementfläche ermöglicht.

Bevorzugt ist der erste Abstand zwischen dem Stützelement bzw. der Stützelementfläche und der Komponente bzw. der dort zunächst anliegenden Komponente auf Basis einer zumindest teilweisen elastischen Verformbarkeit des ersten Dichtelements einstellbar. Das Einstellen des ersten Abstands erfolgt durch den Unterdruck, welcher durch die Vakuumpumpe erzeugt wird. In Kombination mit der teilweisen elastischen Verformbarkeit des ersten Dichtelements kann durch Einstellen eines gewünschten Unterdruckes der erste Abstand eingestellt werden. Ferner kann der Abstand durch ein weiteres Reduzieren des Unterdruckes weiter vermindert werden bzw. durch ein Anheben des Druckes vergrößert werden. Dies hat den Vorteil, dass der erste Abstand zumindest teilweise über die Ansaugkraft einstellbar ist, welche die zu applizierende Komponente festhält. Hierdurch wird folglich ermöglich, unterschiedliche zu applizierende Komponenten mit unterschiedlicher Verformbarkeit oder unterschiedlicher Elastizität an einem Bauteil zu applizieren.

Gemäß einer bevorzugten Ausführungsform des Verfahrens erfolgt die Reduktion des ersten Unterdrucks, d.h. des Ansaugens, kontinuierlich, wobei die Vakuumpumpe den ersten Unterdruck, den der Manipulator für das Ansaugen benötigt, kontinuierlich oder stufenweise einem Umgebungsnormaldruck angleicht. Hierdurch lässt der Manipulator die angeordnete und an dem Bauteil fixierte Komponente wieder los. Ferner kann die zu applizierende Komponente hierdurch sanft an das Bauteil angeschmiegt werden. In dem Fall, in dem abzusehen ist, dass die zu applizierende Komponente an dem Bauteil nicht oder nicht sicher befestigt ist oder falls der Prozess des Anbringens abgebrochen werden muss, kann ein erneuter erster Unterdruck aufgebaut werden, um die zu applizierende Komponente erneut vom Manipulator halten zu lassen. In diesem Fall kann dann z.B. noch eine weitere Klebeschicht auf die zu applizierende Komponente angebracht werden. Daraufhin könnte dann ein erneutes Applizieren der zu applizierende Komponente durchgeführt werden. Das kontinuierliche oder auch stufenförmige Reduzieren des Ansaugens erlaubt es, die zu applizierende Komponente von einem Abfallen von dem Bauteil zu bewahren.

Bevorzugt wird die zu applizierende Komponente vor und/oder nach einem Anordnen an dem Bauteil geprägt. Hierdurch kann der zu applizierenden oder der applizierten Komponente eine dreidimensionale Struktur verliehen werden.

Zum Befestigen der zu applizierenden Komponente ist die Bauteilseite der Komponente bevorzugt mit einer Klebeschicht ausgebildet, welche bei Anpressen der Komponente an dem Bauteil mit dem Bauteil verbunden wird. Eine Klebeschicht kann zu Beginn mit einer Maschine aufgebracht werden, indem z.B. eine Rolle Klebstoff auf der Komponente aufbringt und die Komponente im Anschluss daran mit einer abziehbaren Schutzfolie bedeckt wird. Es ist denkbar, dass die zu applizierende Komponente eine Alu-Butyl-Kombination ist, welche bereits im Rohbau im Bereich der Automobilindustrie auf geölten Blechen eingesetzt werden kann. Es ist ferner denkbar, dass die zu applizierende Komponente aus einer anderen selbstklebenden Materialkombination oder nichtklebenden Materialkombination besteht.

Bevorzugt erfolgt das Ankleben der Komponente an das Bauteil ausgehend von einer Ausgangsstelle, welche im Wesentlichen in der Mitte der Komponente ist, bis zu einem Rand der Komponente durch Erhöhen des zweiten Unterdrucks und/oder Angleichen des ersten Unterdrucks an den Umgebungsnormaldruck oder durch, insbesondere kurzzeitiges, Übersteigen des Umgebungsnormaldrucks. Bevorzugt ist das Stützelement federnd im Rahmen gelagert, um so, dem zweiten Unterdruck folgend, in Richtung hin zum Bauteil bewegt werden zu können. Dadurch, dass die Membran über das erste Dichtelement gespannt ist und daher gegenüber dem zweiten Unterdruck mittig über dem ersten Dichtelement den geringsten Widerstand aufweist, wölbt sich diese i.d.R. stets konkav, d.h. zum Bauteil hin.

Nach einer Ausführungsform der Erfindung kann der Durchgangskanal für die Vakuumpumpe bzw. die Luftdurchlassstruktur bevorzugt mittig am Stützelement angeordnet sein bzw. hindurch verlaufen, so dass die Ansaugkraft, welche an der zu applizierenden Komponente anliegt, an dieser Stelle maximal ist. Hierdurch wird erreicht, dass sich die zu applizierende Komponente gegenüber der Stützelementfläche bzw. gegenüber dem Stützelement konvex ausbildet und sich während eines weiteren Ansaugens der zu applizierenden Komponente sich der Form der Stützelementfläche bzw. des Stützelement anschmiegt. Diese kann z.B. konkav gestaltet sein. Gegenüber einer Bauteilfläche ist die zu applizierende Komponente in diesem Zustand dann ebenfalls konkav ausgebildet. Beim darauffolgenden Anordnen der Komponente an dem Bauteil löst sich die zu applizierende Komponente kontinuierlich von der Stützelementfläche bzw. dem Aufnahmeelement ab, so dass beim Anpressen der Komponente an das Bauteil die Komponente zumindest teilweise konkav gegenüber der Bauteilfläche ausgebildet ist und sich an diese anschmiegt. Dies bedeutet, dass sich die Komponente ausgehend von einem mittigen Punkt der Komponente an das Bauteil anschmiegt und durch Angleichen der Unterdrücke bis zu ihren Rändern an das Bauteil anschmiegt. Unerwünschte Lufteinschlüsse zwischen der Komponente und dem Bauteil können hierdurch vermieden werden.

In vorteilhafter Weise kann ein Roboter, welcher mit einem beschriebenen Manipulator ausgebildet ist, gemäß einem Ausführungsbeispiel des beschriebenen Verfahrens teilautomatisch oder auch vollautomatisch selbstständig arbeiten. In Zusammenarbeit mit einem Arbeiter kann die zu verrichtende Arbeit flexibel zwischen dem Arbeiter und einem kollaborierenden Roboter aufgeteilt werden, was insgesamt zu kostengünstigeren Herstellungsmöglichkeiten führt.

Weitere Vorteile und Merkmale der vorliegenden Erfindung ergeben sich aus der nachfolgenden Beschreibung bevorzugter Ausführungsformen mit Bezug auf die beigefügten Figuren. Es versteht sich, dass einzelne in den jeweiligen Figuren gezeigte Ausführungsformen Merkmale aufweisen können, die auch in anderen Ausführungsformen zum Einsatz gelangen können, auch wenn dies nicht explizit genannt ist, und sofern dies nicht auf Grund technischer Gegebenheiten oder explizit ausgeschlossen wurde. Es zeigen:
- Fig. 1: ein schematisch dargestelltes Ansaugen einer zu applizierenden Komponente von einem Stapel durch einen Manipulator,
- Fig. 2: das Applizieren einer Komponente an einem Bauteil mittels eines Manipulators,
- Fig. 3: das Applizieren einer Komponente an einem Bauteil mittels eines Manipulators mit alternativer, abnehmbarer Stützelementfläche,
- Fig. 4: eine Luftdurchlassstruktur gemäß der Erfindung, die auf den Manipulator aufgesetzt werden kann, und
- Fig. 5: das Applizieren einer Komponente an einem Bauteil mittels eines Manipulators mit alternativer, abnehmbarer Stützelementfläche auf einem federnd gelagerten Stützelement und mehreren Vakuumkammern.

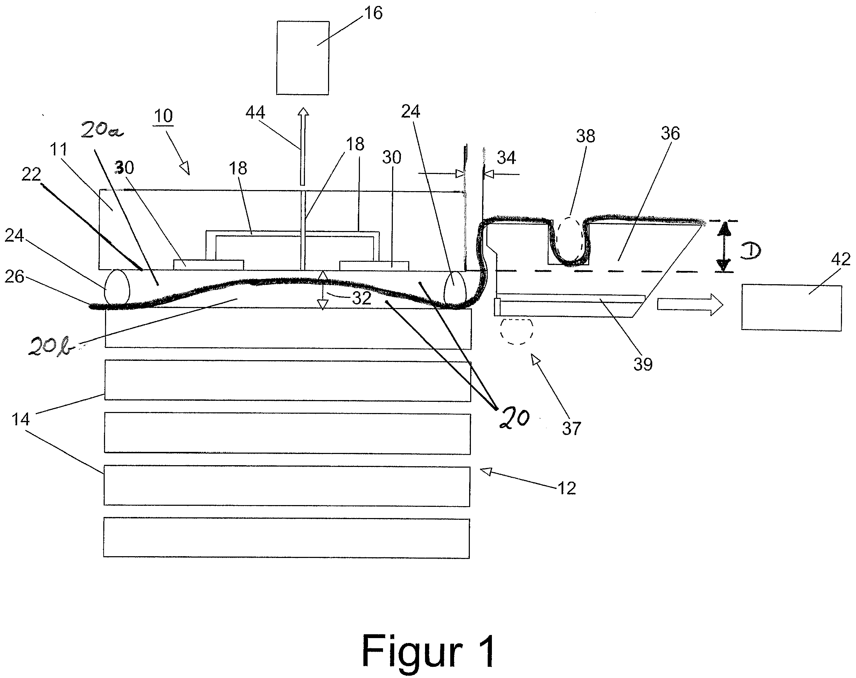

Im Folgenden wird in Zusammenschau der Figs. 1 bis 5 die vorliegende Erfindung anhand bevorzugter Ausführungsbeispiele des Verfahrens zum Applizieren, insbesondere zum Anpressen, einer Komponente an ein Bauteil mittels eines Manipulators beschrieben.

Fig. 1 zeigt, wie in einem ersten Verfahrensschritt durch einen Manipulator 10 von einem Stapel 12 eine zu applizierende Komponente 14 entfernt wird, indem der Manipulator 10 die zu applizierende Komponente 14 ansaugt. Der Manipulator 10 ist mit einer ersten Vakuumpumpe 16 verbunden. Der Manipulator 10 weist ferner ein als Stützplatte ausgebildetes Stützelement 11 auf, das mindestens einen Durchgangskanal 18 aufweist, welcher mit der ersten Vakuumpumpe 16 in Verbindung steht. Durch den Durchgangskanal 18 wird Luft, welche sich zwischen einer Membran 26 und dem Stützelement 11 befindet, entzogen, so dass sich die Membran 26, wie in Figur 1 gezeigt, in Richtung des Stützelements verschiebt bzw, dehnt.

Die Verschiebung bzw. Dehnung der Membran 26 in Richtung des Stützelements 11 erfolgt durch ein dichtendes Anliegen des Stützelements 11 an der Komponente 14, wobei zwischen Stützelement 11 und Komponente 14 ein erstes Dichtelement 24 angeordnet ist, das darüber hinaus die Membran 26 vom Stützelement 11 beabstandet derart hält, dass es zunächst an der Komponente 14 anliegt. Durch Aktivieren der Vakuumpumpe 16 wird die Luft bevorzugt über eine oder mehrere Luftdurchlassstrukturen 30, die auf der Stützelementfläche 22 oder angrenzend daran angeordnet sind, entzogen, so dass sich die Membran 26 innerhalb des ersten Abstands 32 zwischen Stützelement 11 und Komponente 14 dehnt und in einem sich dann bildenden ersten Teilzwischenraum 20a ein Unterdruck und dadurch ein Ansaugen der Komponente erzielt. Der sich im ersten Teilzwischenraum 20a bildende Unterdruck verursacht wiederum einen weiteren Unterdruck in einem zweiten Teilzwischenraum 20b, der sich zwischen Membran 26 und Komponente 14 bildet. Dieser zweite Teilzwischenraum 20b wird seitlich durch die sich zwischen Stützelement 11 und Komponente 14 befindliche Membran abgedichtet oder, wahlweise, durch zusätzliche Dichtelemente 24 zwischen der Membran 26 und dem Stützelement 11.

Der erste Abstand 32 ist dabei so gewählt, dass sich die Membran ausreichend weit von der Ansaugfläche der Komponente 14 entfernen und dort einen entsprechenden ersten Unterdruck erzeugen kann. Gleichzeitig soll verhindert werden, dass sich die Membran 26 vollflächig auf der Stützelementfläche 22 des Stützelement 11 anlegt und der erste Unterdruck nicht ausreicht, um die Komponente 14 sicher anheben zu können.

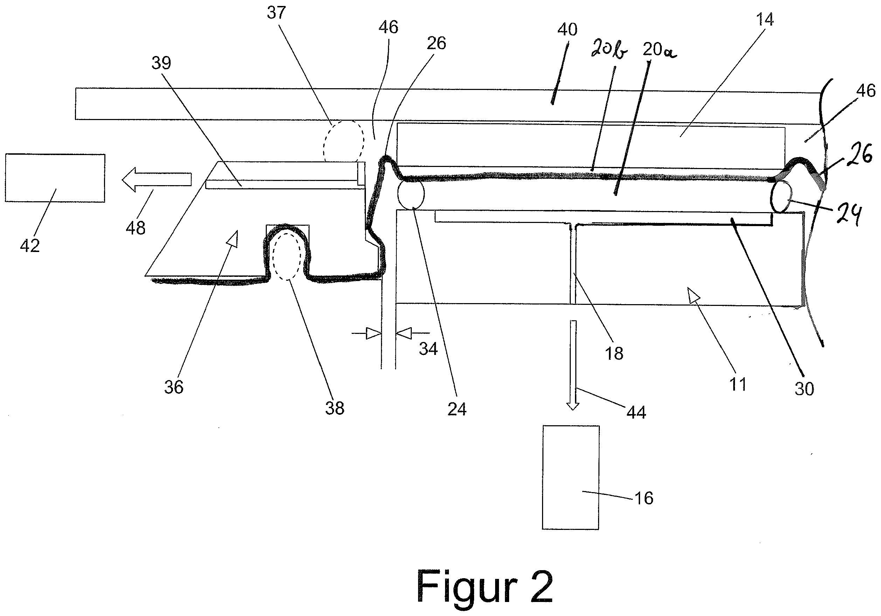

Die Membran 26 ist bevorzugt in einem Rahmen 36 eingespannt und dort mittels Befestigungselementen 38 dichtend gelagert. Bevorzugt wird hier ein Keder verwendet, der umlaufend in einer Nut oder einer Schiene am Rahmen 36 befestigt ist. Der Rahmen 36 weist zweite Durchgangskanäle 39 auf mit Hilfe derer (vgl. Fig. 2) ein zweiter Luftstrom 48 zu einer Vakuumpumpe 42 geführt werden kann, um in einem zweiten Zwischenraum 46 einen zweiten Unterdruck zu erzeugen.

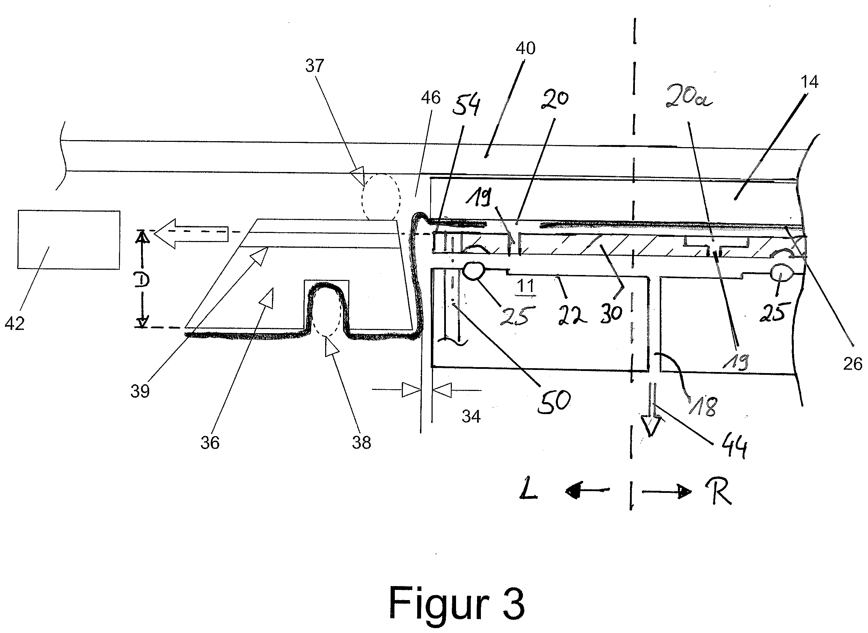

Auf die ersten Dichtelemente 24 kann auch verzichtet werden (vgl. auch Fig. 3), sobald das Stützelement 11 ausreichend weit in den Rahmen 36 eintaucht, d. h. eine Eindringtiefe D von beispielsweise ≥ 1 mm erreicht, bevorzugt ≥ 5 mm, besonders bevorzugt ≥ 10 mm. Es kommt zu einer Spannung der Membran 26, die sich dichtend um die Luftdurchlassstruktur (30) herum anlegt und somit zum dichtenden Anliegen des Stützelements 11 an der Komponente 14, auch ohne erste Dichtelemente 24. Die Membran 26 ist in diesem Fall gelocht, semipermeabel oder perforiert (nicht gezeigt), so dass der sich entwickelnde Unterdruck im ersten Teilzwischenraum 20a unmittelbar auch im zweiten Teilzwischenraum 20b entwickelt und es dadurch zu einem Ansaugen der Komponente 14 am Stützelement 11 kommt.

Wie in Fig. 2 gezeigt, wird die Komponente 14 mittels des Manipulators 10 an einem Bauteil 40 angeordnet, wobei der Rahmen 36 zweite Dichtelemente 37 trägt, die den Rahmen 36 gegenüber dem Bauteil 40 dichtend abschließen. Dadurch entwickelt sich ein zweiter Zwischenraum 46 zwischen dem Rahmen 36, dem Bauteil 40 und dem Stützelement 11 bzw. der Membran 26, die im Rahmen 36 gespannt wird und ggf. über erste Dichtelemente 24 über das Stützelement 11 gespannt ist und die Komponente 14 saugend hält.

Sobald die Komponente 14 am Bauteil 40 fixiert ist, beispielsweise teilhaftend anliegt, kann der erste Luftstrom 44 reduziert oder sogar abgeschaltet werden, während vor dem Fixieren bzw. Anhaften der zweite Luftstrom 48 bereits für einen Unterdruck im zweiten Zwischenraum 46 sorgt, um etwaige Lufteinschlüsse zwischen der Komponente 14 und dem Bauteil 40 zu reduzieren oder gänzlich zu vermeiden. Durch weitere Reduktion bzw. Abschalten des ersten Unterdrucks und Erhöhen des zweiten Unterdrucks im zweiten Zwischenraum 46 kann die Komponente 14 dann vollflächig am Bauteil 40 befestigt, insbesondere verklebt werden, ohne dass es zu Lufteinschlüssen kommt.

Fig. 2 zeigt den befestigten Zustand, in dem die Membran 26 wieder mit der Komponente 14 vom Stützelement 11 beabstandet an der Komponente 14 anliegt und durch den zweiten Unterdruck im zweiten Zwischenraum 46 in Richtung des Bauteils 40 gezogen wird. Mit Vorteil ist dabei ein zweiter Abstand 34 zwischen Stützelement 11 und Rahmen 36 des Manipulators 10 vorgesehen, der eine Bewegung des Stützelements 11 und ein Kollidieren mit dem Rahmen 36 vermeidet. Gleichzeitig ist die Komponente 14 gleich groß oder kleiner als das Stützelement 11, wodurch ein Anliegen der Membran 26 bei Erzeugen des zweiten Unterdrucks im zweiten Zwischenraum 46 vermieden und ein sicheres Abführen der Luft mittels des zweiten Luftstroms 48 zur zweiten Vakuumpumpe 42 gewährleistet.

Fig. 3 zeigt wie Fig. 2 das Anhaften der Komponente 14 am Bauteil 40, wobei das Stützelement 11 hier mit einer abnehmbaren Luftdurchlassstruktur 30 (leicht angehoben) dargestellt ist, die ggf. über eine Dichtung 25 gegenüber dem Stützelement 11 dichtend an der Stützelementfläche 22 angeordnet ist. Die abnehmbare Luftdurchlassstruktur 30 wird dabei über Führungs- und Befestigungselemente (hier nur schematisch gezeichnet), wie z.B. Stifte, Schrauben, Schnappverschlüsse oder dgl. an dem Stützelement 11 auswechselbar befestigt angeordnet.

Fig. 3 zeigt dabei zwei Versionen R, L einer Luftdurchlassstruktur 30 mit entsprechend geeigneter Membran 26 einer bevorzugten Ausführungsform der Erfindung. Eine erste Version R, rechts einer gestrichelten Trennlinie gezeigt und eine zweite Version L, links der gestrichelten Trennlinie gezeigt.

In der ersten Version R, rechts dargestellt, weist die Luftdurchlassstruktur 30 Teilkanäle 19 auf, die gegenüber der Membran 26 durchlässig sind, dort den ersten Teilzwischenraum 20a ausbilden und die Luft in Richtung Vakuumpumpe 16 abführen. Die Membran 26 dichtet dabei gegenüber der auswechselbaren Luftdurchlassstruktur 30 an dessen Rändern ab und wird durch den ersten Unterdruck angezogen, so dass zwischen Membran 26 und Komponente 14 ein weiterer Unterdruck erzeugt wird.

In der zweiten Version L, links dargestellt, weist die Luftdurchlassstruktur 30 Teilkanäle 19 auf, die gegenüber der Membran 26 durchlässig sind, dort den ersten Zwischenraum 20 ausbilden und die Luft in Richtung Vakuumpumpe 16 abführen. Die Membran 26 ist in dieser zweiten Version perforiert, weist also Löcher auf und dichtet dabei gegenüber der auswechselbaren Luftdurchlassstruktur 30 an dessen Rändern ab. Die Komponente 14 wird durch den im ersten Zwischenraum 20 erzeugten Unterdruck angesaugt und haftet an der Luftdurchlassstruktur 30. Die Membran 26 dichtet den ersten Zwischenraum gegenüber der Aussenwelt ab.-Der wesentliche Vorteil dieser zweiten Version ist die Fehlererkennung: Fällt die Komponente 14 ab, so kann der dadurch entstehende Unterdruckabfall an der Vakuumpumpe 16 oder einem Drucksensor (nicht gezeigt) sofort detektiert und die weitere Bewegung des Manipulators gestoppt werden.

An der Stützelementfläche 22 des Stützelements 11 wird die Luftdurchlassstruktur 30 dichtend angeordnet, an deren Enden eine Dichtung 25 dargestellt ist. Die Luftdurchlassstruktur 30 kann auswechselbar am Stützelement 11 vorgesehen sein, um verschiedene Ansaugpunkte auf dem Stützelement 11 bzw. Ansaugflächen für unterschiedliche Komponenten 14 realisieren zu können. Membran 26 wird hier über ein als Keder ausgebildetes und in einer Nut des Rahmens 36 festgelegtes Befestigungselement 38 gespannt und kann sich so über die Luftdurchlassstruktur (30) am Stützelement 11 spannen. Dazu sind die Ecken und Kanten 54 der Luftdurchlassstruktur 30 bevorzugt abgerundet, um eine Beschädigung der gespannten Membran 26 zu verhindern. Es ist aber auch möglich, die Ecken und Kanten 54 der Luftdurchlassstruktur 30 etwas in Richtung der anzuhebenden Komponente, also vom Stützelement 11 weg gerichtet, anzuheben bzw. dort Ausformungen oder Wölbungen anzubringen, über die sich die Membran 26 dann dichtend anlegt. Die in Fig. 2 gezeigten Dichtelemente 24 sind somit optional und können, wie in Fig. 3 gezeigt, auch weggelassen werden, wenn die Membran 26 ausreichend gespannt ist und dadurch die Dichtwirkung zwischen Stützelement und Komponente übernimmt.

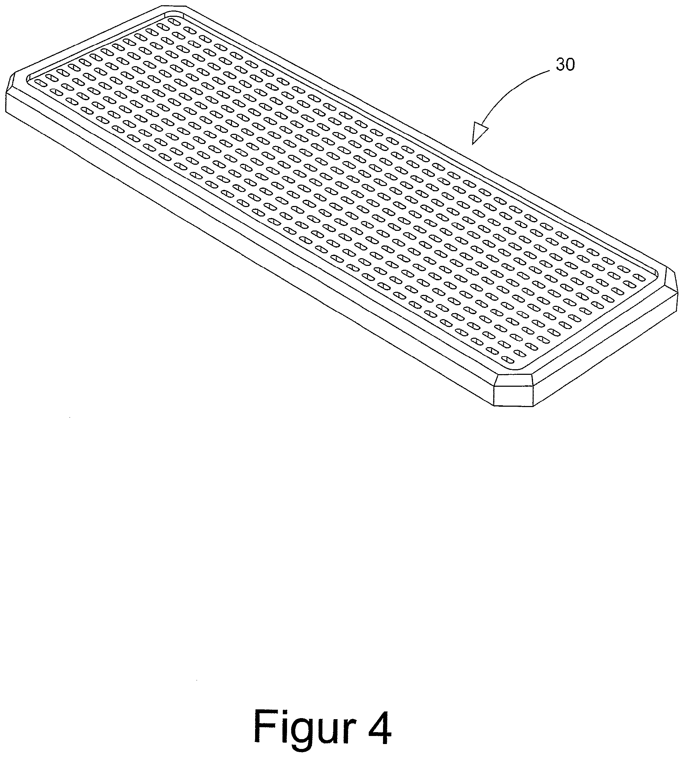

In allen Figuren ist im Wesentlichen lediglich eine Seite des Manipulators 10 gezeigt, d. h. der Rahmen 36 ist insbesondere umlaufend, d. h. insbesondere kreisförmig oder rechteckförmig, um das Stützelement 11 herum angeordnet. Das Stützelement 11 ist bezogen auf den Rahmen 36 mit Vorteil in Richtung des Bauteils 40 beweglich angeordnet, kann also zusätzlich zum zweiten Unterdruck oder unabhängig davon die Komponente 14 nach dem Anordnen des Rahmens 36 am Bauteil 40 in Richtung Bauteil 40 verschieben, zum Beispiel indem es federn im Rahmen 36 bzw. gegenüber einem Rahmengehäuse 56 geführt gelagert ist, um so eine Relativbewegung des Stützelements 11 im Rahmen 36, im wesentlichen orthogonal zum Bauteil 40, ausführen zu können
Fig. 4 zeigt eine Luftdurchlassstruktur 30. Die Luftdurchlassstruktur 30 kann an die Stützelementfläche 22 angebracht werden. Bevorzugt besteht die Luftdurchlassstruktur 30 aus einem starren, teilweise elastisch verformbaren oder vollständig elastisch verformbaren Material, wie beispielsweise einer Metallgitterstruktur, einem Gummi, einem Silikon, einem elastisch verformbaren Kunststoff, einer Schwammstruktur oder dergleichen. Ferner ist es denkbar, dass die Luftdurchlassstruktur 30 an einem Aufnahmeelement (nicht gezeigt) angebracht wird, welches wiederum an die Stützelementfläche 22 angebracht wird. Ein solches Aufnahmeelement kann beispielsweise eine vorgegebene dreidimensionale Struktur aufweisen, welche insbesondere komplementär zu dem Bauteil 40 ist. Durch das Anbringen der Luftdurchlassstruktur 30 und/oder des ersten Dichtelements 24 an dem Aufnahmeelement wird ein kontinuierlicher Luftabtransport beim Anlegen eines Unterdrucks ermöglicht, so dass die zu applizierende Komponente mit der dazwischenliegenden Membran die Form des Aufnahmeelements annimmt. Hierdurch kann auch bei Verwendung eines vorgeformten Aufnahmeelements (nicht dargestellt) sichergestellt werden, dass ein insbesondere gleichmäßiger Abstand zwischen dem Aufnahmeelement und der angesaugten zu applizierenden Komponente 14 eingehalten wird, sodass ein Luftstrom 44 während des Ansaugens aufrechterhalten werden kann.

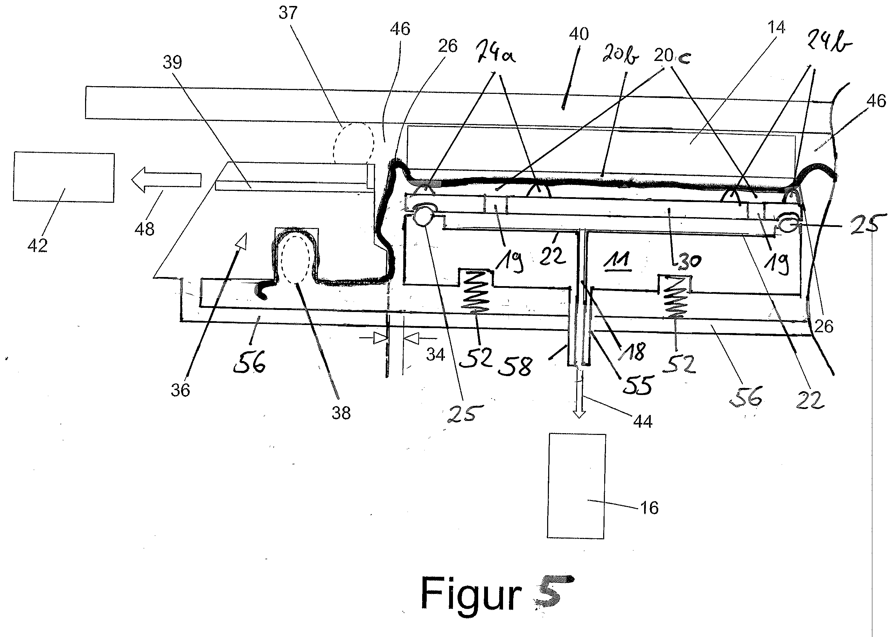

Fig. 5 zeigt eine gegenüber Fig. 3 leicht abgewandelte weitere Ausführungsform der Erfindung. Auch hier ist das Stützelement 11 mit einer abnehmbaren Luftdurchlassstruktur 30 (diesmal nur eine Variante und im zusammengesetzten Zustand) dargestellt, die ebenfalls mittels einer Dichtung 25 gegenüber dem Stützelement 11 dichtend an der der Membran 26 zugewandten Stützelementfläche 22 angeordnet ist. Die abnehmbare Luftdurchlassstruktur 30 wird über Führungs- und Befestigungselemente (hier nicht dargestellt), wie z.B. Stifte, Schrauben, Schnappverschlüsse oder dgl. oder mittels der Dichtung 25 an dem Stützelement 11 auswechselbar befestigt angeordnet. Die Luftdurchlassstruktur 30 weist dabei Teilkanäle 19 auf, die hier jedoch mit Unterdruckbereichen 20c in Verbindung stehen, die mittels Dichtbereichslippen 24a, 24b unterschiedliche Unterdruckbereiche bzw. -zonen zwischen dem Stützelement 11 und der Komponente 14 ausbilden.

Mittels dieser Unterdruckzonen, die auf der Stützelementfläche 22 beliebig anordnungsbar sind, kann individuell auf unterschiedliche Anforderungen beim Applizieren von Komponenten 14, deren Gewicht, Fragilität, etc.. eingegangen werden. Die sich über diese Unterdruckzonen erstreckende Membran 26 kann sowohl luftdurchlässig als auch luftdicht sein, je nach bevorzugter Anwendungsart.

Die Luft wird somit aus den Unterdruckbereichen 20c mittels der Teilkanäle 19 in Richtung Vakuumpumpe 16 abgeführt. Die Membran 26 dichtet dabei die Unterdruckbereiche 20c, die sich im Falle einer luftdurchlässigen Membran 26 bis zur Komponente 14 hin erstrecken, gegenüber der Komponente 14 mittels der Dichtbereichslippen 24a, 24b ab. An der Stützelementfläche 22 des Stützelements 11 wird die Luftdurchlassstruktur 30 dichtend angeordnet, an deren Enden wiederum die Dichtung 25 dargestellt ist. Die Luftdurchlassstruktur 30 kann auswechselbar am Stützelement 11 vorgesehen sein, um verschiedene Unterdruckbereiche 20c auf dem Stützelement 11 bzw. Ansaugflächen für unterschiedliche Komponenten 14 realisieren zu können.

Membran 26 wird hier wieder über ein als Keder ausgebildetes und in einer Nut des Rahmens 36 festgelegtes Befestigungselement 38 gespannt und kann sich so über die Luftdurchlassstruktur 30, insbesondere über die Dichtbereichslippen 24a, 24b an der Luftdurchlassstruktur 30 spannen.

Weiterhin zeigt Fig. 5 schematisch Federn 52, mit Hilfe derer das Stützelement 11 federnd im Rahmen 36 gelagert ist. Mittels eines oder mehrerer am Stützelement 11 befestigten Zapfen 58, die in einem oder mehreren Lagern 55 am oder in einem schematisch gezeigten Rahmengehäuse 56 gleitend gelagert sind, ist das Stützelement 11 im Rahmen 36 beweglich gelagert. In der in der Fig. 5 gezeigten konkreten Ausführungsform ist ein zentral angeordneter Zapfen 58 gezeigt, der in einem Lager 55 im Rahmengehäuse 56 gleichzeitig zur Aufnahme des ersten Durchgangskanals 18 dient, so dass die Luft sicher auch bei einem sich relativ zum Rahmen 36 bzw. Rahmengehäuse 56 bewegenden Stützelement 11 abgeführt bzw. abgesaugt werden kann. Dadurch kann das Stützelement 11 im wesentlichen orthogonal zum Bauteil 40 im Rahmen 36 federnd gleiten. Der zweite Abstand 34 zwischen dem Stützelement 11 und dem Rahmen 36 verhindert eine durch die Relativbewegung zwischen Stützelement 11 und Rahmen 36 mögliche Beschädigung der Membran 26.

### Bezugszeichenliste:

- 10: Manipulator
- 11: Stützelement
- 12: Stapel
- 14: Komponente
- 16: erste Vakuumpumpe
- 18: erster Durchgangskanal
- 19: Teilkanal
- 20: erster Zwischenraum
- 20a: erster Teilzwischenraum
- 20b: zweiter Teilzwischenraum
- 20c: Unterdruckbereich
- 22: Stützelementfläche
- 24: erstes Dichtelement
- 24a: erste Dichtbereichslippe
- 24b: zweite Dichtbereichslippe
- 25: Dichtung
- 26: Membran
- 30: Luftdurchlassstruktur
- 32: erster Abstand
- 34: zweiter Abstand
- 36: Rahmen
- 37: zweites Dichtelement
- 38: Befestigungselement
- 39: zweiter Durchgangskanal
- 40: Bauteil
- 42: zweite Vakuumpumpe
- 44: erster Luftstrom
- 46: zweiter Zwischenraum
- 48: zweiter Luftstrom
- 52: Feder
- 54: Kante

- 55: Lager
- 56: Rahmengehäuse
- 58: Zapfen
- D: Eindringtiefe

## Patentansprüche

1. Verfahren zum Applizieren, insbesondere zum gleichmäßigen Anpressen über eine Fläche, einer Komponente (14) an einem Bauteil (40) mittels eines Manipulators (10), wobei das Verfahren folgende Schritte aufweist:
- Aufnehmen der zu applizierenden Komponente (14) mittels eines ersten Unterdrucks in einem ersten Zwischenraum (20) zwischen einem Stützelement (11) und der Komponente (14),
- Bewegen des Manipulators (10) mit Komponente (14) zu dem Bauteil (40),
- Anordnen der Komponente (14) an zumindest einer Teilfläche des Bauteils (40) mittels des Manipulators (10), wobei während des Anordnens ein zweiter Unterdruck in einem zweiten Zwischenraum (46) zwischen dem Stützelement (11) und dem Bauteil (40) erzeugt wird,
und
- Befestigen der Komponente (14) am Bauteil (40) durch Erhöhen der Differenz zwischen dem ersten und zweiten Unterdruck.

2. Verfahren nach Anspruch 1, **dadurch gekennzeichnet,**
**dass** der Manipulator (10) den ersten Unterdruck bis nach dem erfolgten Anordnen und zumindest teilweisen Befestigung der Komponente (14) am Bauteil (40) kontinuierlich aufrechterhält.

3. Verfahren nach einem der Ansprüche 1 oder 2,
**dadurch gekennzeichnet,**
**dass** der erste Unterdruck in dem ersten Zwischenraum (20) mittels einer Membran (26) erzeugt wird, die zwischen der Komponente (14) und dem Stützelement (11) dichtend angeordnet ist und die auf der dem Stützelement (11) zugewandten Seite mit einer Vakuumpumpe (16, 42) luftleitend in Verbindung steht.

4. Verfahren nach einem der vorhergehenden Ansprüche,
**dadurch gekennzeichnet,**
**dass** der zweite Unterdruck in dem zweiten Zwischenraum (46) mittels eines am Bauteil (40) dichtend angeordneten Rahmens (36) des Manipulators (10) erzeugt wird, wobei der zweite Zwischenraum (46) luftleitend mit der Vakuumpumpe (16, 42) in Verbindung steht.

5. Verfahren nach einem der Ansprüche 3 oder 4,
**dadurch gekennzeichnet,**
**dass** der zweite Zwischenraum (46) durch den Rahmen (36), das Bauteil (40) und die Membran (26) begrenzt wird, und
**dass** die Komponente (14) nach dem Anordnen in dem zweiten Zwischenraum (46) zu liegen kommt.

6. Verfahren nach einem der Ansprüche 3 bis 5,
**dadurch gekennzeichnet,**
**dass** das Stützelement (11) mindestens einen Durchgangskanal (18) aufweist, der mit der Vakuumpumpe (16, 42) und mindestens einer an der der Membran (26) zugewandten Seite des Stützelements (11) angeordneten Luftdurchlassstruktur (30) luftleitend in Verbindung steht, dass
die Membran (26) an der Luftdurchlassstruktur (30) zur Herstellung einer dichtenden Anlage angeordnet wird, und
**dass** Luft zwischen der Membran (26) und dem Stützelement (11) durch die Luftdurchlassstruktur (30) entfernt wird, so dass sich die Membran (26) zum Stützelement (11) hin bewegt und dort oder an der Luftdurchlassstruktur (30) dichtend anliegt, so dass im ersten Zwischenraum (20) ein Unterdruck entsteht.

7. Verfahren nach Anspruch 6,
**dadurch gekennzeichnet,**
**dass** die Membran (26) über mindestens ein erstes Dichtelement (24) und/oder eine Dichtbereichslippe (24a, 24b) gegenüber dem Stützelement (11), jedenfalls im Bereich der mindestens einen Luftdurchlassstruktur (30), dichtend beabstandet wird.

8. Verfahren nach einem der vorhergehenden Ansprüche,
**dadurch gekennzeichnet,**
**dass** die Komponente (14) eine Ansaugseite, mit der die Komponente (14) flächig von dem Manipulator (10) angesaugt wird, und eine gegenüberliegende, insbesondere klebende Bauteilseite aufweist, mit der die Komponente (14) an dem Bauteil (40) angeordnet, insbesondere angepresst und angeklebt, wird.

9. Verfahren nach einem der vorhergehenden Ansprüche 3 bis 8,
**dadurch gekennzeichnet,**
**dass** die mindestens eine Luftdurchlassstruktur (30) auf der der Membran (26) zugewandten Außenseite des Stützelements (11) angebracht, angeformt oder auswechselbar angeordnet ist.

10. Verfahren nach einem der vorhergehenden Ansprüche,
**dadurch gekennzeichnet,**
**dass** der zweite Unterdruck mittels eines Anordnens der Komponente (14) an dem Bauteil (40) mittels mindestens eines zweiten Dichtelements (37) erzeugt wird, das zwischen dem Rahmen (36) des Manipulators (10) und dem Bauteil (40) zu liegen kommt, so dass der zweite Zwischenraum (46) entsteht, und
- **dass** das Befestigen der Komponente (14) am Bauteil (40) in einem ersten Schritt durch Reduktion des ersten und/oder Erhöhen des zweiten Unterdrucks erfolgt, so dass die Komponente (14) zumindest teilweise am Bauteil (40) anhaftet und in einem zweiten Schritt durch eine weitere Reduktion des ersten und/oder Erhöhen des zweiten Unterdrucks und/oder Abschalten des ersten Unterdrucks am Bauteil (40) befestigt wird.

11. Verfahren nach einem der vorhergehenden Ansprüche,
**dadurch gekennzeichnet,**
**dass** das erste Dichtelement (24), ggf. zusammen mit der mindestens einen Luftdurchlassstruktur (30), am Stützelement (11), insbesondere auswechselbar, umlaufend angeordnet ist.

12. Verfahren nach einem der vorhergehenden Ansprüche,
**dadurch gekennzeichnet,**
**dass** der erste Unterdruck mittels einer ersten Vakuumpumpe (16) und der zweite Unterdruck mittels einer zweiten Vakuumpumpe (42) erzeugt wird, und/oder
**dass** der erste Zwischenraum (20) über die Membran (26) und/oder der zweite Zwischenraum (46) über einen Druckregler mit einer Vakuumpumpe (16, 42) derart verbunden sind,
**dass** der erste und zweite Unterdruck kontinuierlich oder stufenweise erhöht oder vermindert werden können.

13. Verfahren nach einem der vorhergehenden Ansprüche, wobei der Rahmen (36) und das Stützelement (11) derart zueinander beabstandet sind, dass ein Berühren einer angesaugten Komponente (14) durch den Rahmen (36) unterbleibt.

14. Verfahren nach einem der vorhergehenden Ansprüche, wobei die Bauteilseite der Komponente (14) mit einer Klebeschicht ausgebildet ist, welche beim Befestigen der Komponente (14) an dem Bauteil (40) mit dem Bauteil (40) verbunden wird.

15. Verfahren nach einem der vorhergehenden Ansprüche, wobei das Befestigen der Komponente (14) an dem Bauteil (40) ausgehend von einer Ansaugstelle, welche im Wesentlichen mittig an der Komponente (14) liegt, bis zu einem Rand der Komponente (14) durch Erhöhen der Differenz zwischen dem ersten und zweiten Unterdruck derart erfolgt, dass die Komponente (14) jedenfalls umlaufend ohne Lufteinschlüsse am Bauteil (40) zu liegen kommt.

16. Vorrichtung zum Applizieren, insbesondere zum gleichmäßiges Anpressen über eine Fläche, einer Komponente (14) an einem Bauteil (40) mit einem Manipulator (10),
- der die zu applizierende Komponente (14) mittels eines ersten Unterdrucks aufnimmt, der in einem ersten Zwischenraum (20) zwischen einem Stützelement (11) und der Komponente (14) erzeugt wird,
- der die zu applizierende Komponente (14) zu dem Bauteil (40) bewegt,
- der die Komponente (14) an zumindest einer Teilfläche des Bauteils (40) anordnet, wobei während des Anordnens ein zweiter Unterdruck in einem zweiten Zwischenraum (46) zwischen dem Stützelement (11) und dem Bauteil (4) erzeugt wird, und
- der die Komponente (14) am Bauteil (40) durch Erhöhen der Differenz zwischen dem ersten und zweiten Unterdruck insbesondere klebend befestigt.

## Claims

1. Method of applying a component (14) to an assembly (40) by means of a manipulator (10), especially of uniformly pressing it on over an area, wherein the method has the following steps:
- taking up the component (14) to be applied by means of a first reduced pressure in a first interspace (20) between a support element (11) and the component (14),
- moving the manipulator (10) with component (14) toward the assembly (40),
- disposing the component (14) on at least part of the area of the assembly (40) by means of the manipulator (10), during which disposing a second reduced pressure is generated in a second interspace (46) between the support element (11) and the assembly (40),
and
- securing the component (14) on the assembly (40) by increasing the differential between the first and second reduced pressures.

2. Method according to Claim 1, **characterized in that** the manipulator (10) continuously maintains the first reduced pressure until completion of disposing and at least partial securing of the component (14) on the assembly (40).

3. Method according to either of Claims 1 and 2,
**characterized in that**
the first reduced pressure in the first interspace (20) is generated by means of a membrane (26) which is disposed between component (14) and the support element (11) to form a seal, and which is connected in an air-conducting manner to a vacuum pump (16, 42) on the side facing the support element (11).

4. Method according to any of the preceding claims,
**characterized in that**
the second reduced pressure in the second interspace (46) is generated by means of a frame (36) of the manipulator (10) which is disposed on the assembly (40) to form a seal, wherein the second interspace (46) is connected in an air-conducting manner to the vacuum pump (16, 42).

5. Method according to either of Claims 3 and 4,
**characterized in that**
the second interspace (46) is bounded by the frame (36), the assembly (40) and the membrane (46), and **in that** the component (14) comes to rest in the second interspace (46) after the disposing.

6. Method according to any of Claims 3 to 5,
**characterized in that**
the support element (11) has at least one passage channel (18) which is connected in an air-conducting manner to the vacuum pump (16, 42) and at least one air passage structure (30) disposed on the side of the support element (11) facing the membrane (26), **in that**
the membrane (26) is disposed on the air passage structure (30) to produce a sealing system, and **in that** air between the membrane (26) and the support element (11) is removed by the air passage structure (30), such that the membrane (26) is moved toward the support element (11) and lies against it or the air passage structure (30) to form a seal, so as to give a reduced pressure in the first interspace (20).

7. Method according to Claim 6,
**characterized in that**
the membrane (26) is spaced apart and forms a seal via at least one first sealing element (24) and/or a sealing region lip (24a, 24b) with respect to the support element (11), at least in the region of the at least one air passage structure (30).

8. Method according to any of the preceding claims,
**characterized in that**
the component (14) has a suction side by which component (14) is sucked in two-dimensionally by the manipulator (10), and an opposite, especially bonding, assembly side by which the component (14) is disposed on, especially pressed onto and bonded to, the assembly (40).

9. Method according to any of the preceding Claims 3 to 8,
**characterized in that**
the at least one air passage structure (30) is mounted on, formed onto or interchangeably disposed on the outside of the support element (11) facing the membrane (26).

10. Method according to any of the preceding claims,
**characterized in that**
the second reduced pressure is generated by means of a disposing of the component (14) on the assembly (40) by means of at least one second sealing element (37) that comes to rest between the frame (36) of the manipulator (10) and the assembly (40), giving rise to the second interspace (46), and
**in that** the securing of the component (14) on the assembly (40) is effected in a first step by reducing the first and/or increasing the second reduced pressure, such that component (14) adheres at least partly on the assembly (40), and is secured in a second step by a further reduction in the first and/or increase in the second reduced pressure and/or switching off the first reduced pressure on the assembly (40).

11. Method according to any of the preceding claims,
**characterized in that**
the first sealing element (24), optionally together with the at least one air passage structure (30), is disposed around the circumference of the support element (11), especially interchangeably.

12. Method according to any of the preceding claims,
**characterized in that**
the first reduced pressure is generated by means of a first vacuum pump (16) and/or the second reduced pressure by means of a second vacuum pump (42), and/or
the first interspace (20) is connected to a vacuum pump (16, 42) via a pressure regulator via the membrane (26) and/or the second interspace (46) in such a way
that the first and second reduced pressures can be increased or reduced continuously or stepwise.

13. Method according to any of the preceding claims, wherein the frame (36) and the support element (11) are spaced apart from one another in such a way that the frame (36) does not make contact with a sucked-in component (14).

14. Method according to any of the preceding claims, wherein the assembly side of the component (14) is formed with an adhesive layer which is bonded to the assembly (40) on securing of the component (14) of the assembly (40).

15. Method according to any of the preceding claims, wherein the securing of the component (14) on the assembly (40) is effected proceeding from a suction point which is essentially central in the component (14) up to an edge of the component (14) by increasing the differential between the first and second reduced pressures in such a way that the component (14) comes to rest on the assembly (40) without inclusions of air at least at the circumference.

16. Device for applying a component (14) to an assembly (40), especially for uniformly pressing it on over an area, having a manipulator (10)
- which takes up the component (14) to be applied by means of a first reduced pressure which is generated in a first interspace (20) between a support element (11) and the component (14),
- which moves the component (14) to be applied toward the assembly (40),
- which disposes the component (14) over at least part of the area of the assembly (40), during which disposing a second reduced pressure is generated in a second interspace (46) between the support element (11) and the component (4), and
- which secures the component (14) on the assembly (40), especially by bonding, by increasing the differential between the first and second reduced pressures.

## Revendications

1. Procédé pour l'application, en particulier pour le pressage uniforme par le biais d'une surface, d'un composant (14) contre un élément (40) au moyen d'un manipulateur (10), le procédé présentant les étapes suivantes :
- réception du composant à appliquer (14) au moyen d'une première dépression dans un premier espace intermédiaire (20) entre un organe de support (11) et le composant (14),
- déplacement du manipulateur (10) avec le composant (14) vers l'élément (40),
- agencement du composant (14) au niveau d'au moins une surface partielle de l'élément (40) au moyen du manipulateur (10), une deuxième dépression étant générée dans un deuxième espace intermédiaire (46) entre l'organe de support (11) et l'élément (40) pendant l'agencement, et
- fixation du composant (14) à l'élément (40) par augmentation de la différence entre la première et la deuxième dépression.

2. Procédé selon la revendication 1,
**caractérisé en ce que**
le manipulateur (10) maintient en continu la première dépression jusqu'à ce que l'agencement ait été effectué et que le composant (14) ait été fixé au moins partiellement sur l'élément (40).

3. Procédé selon l'une quelconque des revendications 1 et 2,
**caractérisé en ce que**
la première dépression est générée dans le premier espace intermédiaire (20) au moyen d'une membrane (26) qui est disposée de manière hermétique entre le composant (14) et l'organe de support (11) et qui est en liaison avec guidage d'air avec une pompe à vide (16, 42) sur le côté tourné vers l'organe de support (11).

4. Procédé selon l'une quelconque des revendications précédentes,
**caractérisé en ce que**
la deuxième dépression dans le deuxième espace intermédiaire (46) est générée au moyen d'un cadre (36) du manipulateur (10) disposé de manière hermétique au niveau de l'élément (40), le deuxième espace intermédiaire (46) étant en liaison avec guidage d'air avec la pompe à vide (16, 42).

5. Procédé selon l'une quelconque des revendications 3 et 4,
**caractérisé en ce que**
le deuxième espace intermédiaire (46) est limité par le cadre (36), l'élément (40) et la membrane (26), et
**en ce que** le composant (14), après l'agencement, vient se placer dans le deuxième espace intermédiaire (46).

6. Procédé selon l'une quelconque des revendications 3 à 5,
**caractérisé en ce que**
l'organe de support (11) présente au moins un canal de passage (18) qui est en liaison avec guidage d'air avec la pompe à vide (16, 42) et avec au moins une structure de passage d'air (30) disposée au niveau du côté de l'organe de support (11) tourné vers la membrane (26),
**en ce que** la membrane (26) est disposée au niveau de la structure de passage d'air (30) pour établir une application hermétique, et
**en ce que** l'air entre la membrane (26) et l'organe de support (11) est évacué par la structure de passage d'air (30) de telle sorte que la membrane (26) se déplace vers l'organe de support (11) et s'y applique hermétiquement ou s'applique hermétiquement contre la structure de passage d'air (30) de telle sorte qu'une dépression soit produite dans le premier espace intermédiaire (20) .

7. Procédé selon la revendication 6,
**caractérisé en ce que**
la membrane (26) est espacée hermétiquement par le biais d'au moins un premier élément d'étanchéité (24) et/ou d'une lèvre de région d'étanchéité (24a, 24b) par rapport à l'organe de support (11), à chaque fois dans la région de l'au moins une structure de passage d'air (30).

8. Procédé selon l'une quelconque des revendications précédentes,
**caractérisé en ce que**
le composant (14) présente un côté d'aspiration avec lequel le composant (14) est aspiré à plat par le manipulateur (10), et un côté d'élément opposé, en particulier adhésif, avec lequel le composant (14) est disposé au niveau de l'élément (40), en particulier par pressage et collage.

9. Procédé selon l'une quelconque des revendications précédentes 3 à 8,
**caractérisé en ce que**
l'au moins une structure de passage d'air (30) est montée, façonnée ou disposée de manière remplaçable sur le côté extérieur de l'organe de support (11) tourné vers la membrane (26).

10. Procédé selon l'une quelconque des revendications précédentes,
**caractérisé en ce que**
la deuxième dépression est générée au moyen d'un agencement du composant (14) au niveau de l'élément (40) au moyen d'au moins un deuxième élément d'étanchéité (37) qui vient se placer entre le cadre (36) du manipulateur (10) et l'élément (40) de telle sorte que le deuxième espace intermédiaire (46) soit formé, et
- **en ce que** la fixation du composant (14) à l'élément (40) s'effectue dans une première étape par réduction de la première dépression et/ou augmentation de la deuxième dépression de telle sorte que le composant (14) adhère au moins en partie à l'élément (40), et soit fixé à l'élément (40) dans une deuxième étape, par une réduction supplémentaire de la première dépression et/ou une augmentation supplémentaire de la deuxième dépression et/ou une coupure de la première dépression.

11. Procédé selon l'une quelconque des revendications précédentes,
**caractérisé en ce que**
le premier élément d'étanchéité (24) éventuellement conjointement avec l'au moins une structure de passage d'air (30), est disposé sur la périphérie, en particulier de manière remplaçable, au niveau de l'organe de support (11) .

12. Procédé selon l'une quelconque des revendications précédentes,
**caractérisé en ce que**
la première dépression est générée au moyen d'une première pompe à vide (16) et la deuxième dépression est générée au moyen d'une deuxième pompe à vide (42) et/ou
**en ce que** le premier espace intermédiaire (20) est connecté par le biais de la membrane (26), et/ou le deuxième espace intermédiaire (46) est connecté par le biais d'un régulateur de pression, à une pompe à vide (16, 42) de telle sorte que la première et la deuxième dépression puissent être augmentées ou réduites en continu ou de manière graduelle.

13. Procédé selon l'une quelconque des revendications précédentes, dans lequel le cadre (36) et l'organe de support (11) sont espacés l'un de l'autre de telle sorte que le cadre (36) ne vienne pas en contact avec un composant aspiré (14).

14. Procédé selon l'une quelconque des revendications précédentes, dans lequel le côté élément du composant (14) est réalisé avec une couche adhésive qui, lors de la fixation du composant (14) à l'élément (40), est connectée à l'élément (40) .

15. Procédé selon l'une quelconque des revendications précédentes, dans lequel la fixation du composant (14) à l'élément (40) est effectuée à partir d'une zone d'aspiration qui est essentiellement située centralement au niveau du composant (14) jusqu'à un bord du composant (14) par augmentation de la différence entre la première et la deuxième dépression, de telle sorte que le composant (14) vienne à chaque fois se placer contre l'élément (40) sur la périphérie sans inclusion d'air.

16. Dispositif pour l'application, en particulier pour le pressage uniforme par le biais d'une surface, d'un composant (14) contre un élément (40) avec un manipulateur (10),
- qui reçoit le composant (14) à appliquer au moyen d'une première dépression qui est générée dans un premier espace intermédiaire (20) entre un organe de support (11) et le composant (14),
- qui déplace le composant (14) à appliquer vers l'élément (40),
- qui agence le composant (14) au niveau d'au moins une surface partielle de l'élément (40), une deuxième dépression étant générée dans un deuxième espace intermédiaire (46) entre l'organe de support (11) et l'élément (4) pendant l'agencement, et
- qui fixe, en particulier par collage, le composant (14) à l'élément (40) par augmentation de la différence entre la première et la deuxième dépression.
